## Europäisches Patentamt

## European Patent Office

## Office européen des brevets

(19)

(11) Publication number: **0 275 845**
**B1**

(12)

# EUROPEAN PATENT SPECIFICATION

(45) Date of publication of the patent specification:
24.10.90

(51) Int. Cl.⁵: **B60T 8/18**

(21) Application number: **87830461.7**

(22) Date of filing: **22.12.87**

(54) **Device for modulating braking pressure in dependence on load for a motor vehicle provided with a pneumatic braking system.**

(30) Priority: **30.12.86 IT 6798886**

(43) Date of publication of application:
**27.07.88 Bulletin 88/30**

(45) Publication of the grant of the patent:
**24.10.90 Bulletin 90/43**

(84) Designated Contracting States:
**AT BE CH DE ES FR GB IT LI NL SE**

(56) References cited:
**EP-A- 0 021 001**
**DE-A- 2 938 718**
**FR-A- 2 388 703**

(73) Proprietor: **INDUSTRIE MAGNETI MARELLI S.r.l., Via Adriano 81, I-20128 Milano(IT)**

(72) Inventor: **Saini, Alberto, Via Garibaldi, 10, I-20046 Milano(IT)**
Inventor: **Angelillo, Domenico, Via Pisa, 54, I-20099 Sesto San Giovanni Milano(IT)**

(74) Representative: **Quinterno, Giuseppe et al, c/o Jacobacci-Casetta & Perani S.p.A. Via Alfieri, 17, I-10121 Torino(IT)**

## Description

The present invention relates to a device for modulating braking pressure in dependence on load for a motor vehicle provided with a pneumatic braking system.

In particular, the subject of the invention is a device for modulating the braking pressure, comprising a hollow body with a first inlet connector for the braking control pressure and a second inlet connector intended to be connected to a pressure source of the vehicle, and at least one outlet connector intended to be connected to brake members of the vehicle; there being mounted in the body
sensor means for sensing the load carried by the vehicle,
a device for regulating the braking pressure, including a fan-shaped piston cooperating with a variable degree of coupling with a diaphragm which, together with the body, defines a variable-volume control chamber, and
a pressure limiting valve intended to limit the pressure accumulated in the control chamber during braking.

A device of this type is described, for example, in the Bosch manual "Geräte für Druckluftbremsanlagen", May 1982, pages 26, 27 (see also DE-A 2 938 718).

Devices of this type should, in theory, have a linear-type law of variation of the pressure applied to the brakes as a function of the braking control pressure. In an orthogonal Cartesian graph, this law can be represented by a series of characteristic lines consisting of straight lines which radiate from a single point near the origin, each of these straight lines corresponding to a particular value of the load carried by the vehicle.

The actual behaviour of known devices, however, departs from the above-described theoretical behaviour and, particularly when the vehicle is in the partially loaded condition in practice, the pressure applied to the brakes follows the characteristic straight line corresponding to the fully loaded condition and then departs from this characteristic, tending asymptotically towards the characteristic straight line corresponding to the actual load condition. Moreover, not all the characteristic straight lines corresponding to the various possible load conditions come from a single point of the graph representing the variation of the pressure applied to the brakes as a function of the control pressure applied to the modulator device.

The object of the present invention is to produce a modulator device for the braking pressure which is not subject to the disadvantages of devices produced hitherto.

This object is achieved, according to the invention, by means of a device for modulating braking pressure, of the type specified above, whose principal characteristic lies in the fact that it also includes regulating means intended to modify automatically the intervention pressure of the pressure limiting valve in dependence on the load carried by the vehicle.

By virtue of this characteristic, the device according to the invention has an actual behaviour more in keeping with the desired theoretical behaviour.

Further characteristics and advantages of the device according to the invention will be clear from the detailed description which follows with reference to the appended drawings, provided purely by way of non-limiting example, in which:

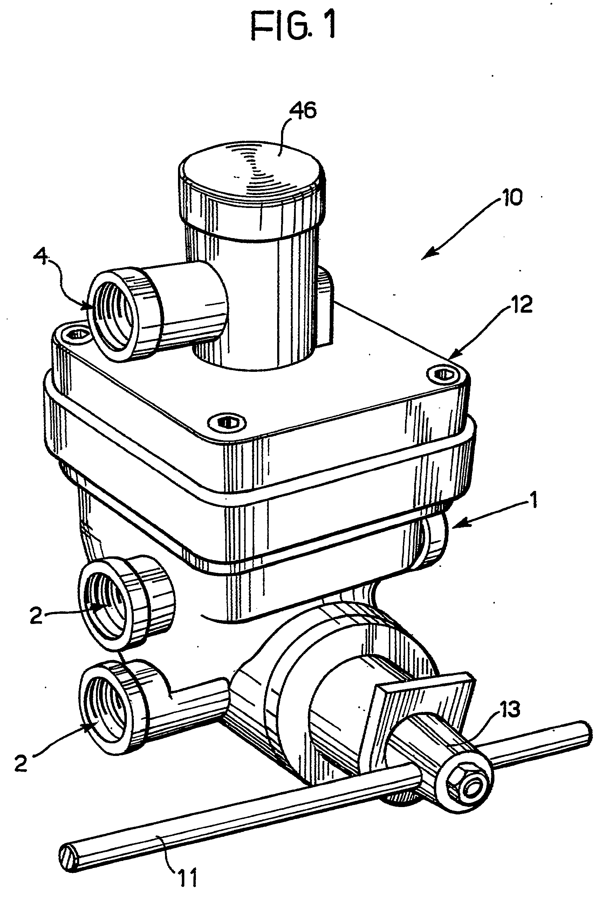

Figure 1 is a perspective view of a braking pressure modulator device according to the present invention,

Figure 2 is a sectional view taken along the line II-II of Figure 1, showing the modulator device in a first operating condition, and

Figure 3 is a sectional view similar to Figure 2, showing the device in a second operating condition.

With reference to the drawings, a device for modulating braking pressure in dependence on load, according to the invention, is generally indicated 10. This device comprises a hollow body 12 fixed, in conditions of use, to a suspended part (for example, the chassis) of a motor vehicle. A shaft 13 extends through the body 12 and has fixed to one of its ends, outside the body, a control lever 11 intended to be connected to a non-suspended part of the motor vehicle, for example, the axle. In use, the angular position of the lever 11 alters in dependence on the load carried by the motor vehicle.

The body 12 has a first connector 4 for the inlet of the braking control pressure and a second connector 1 connected to a pressure reservoir of the vehicle.

The body 12 has a further pair of outlet connectors 2, intended to be connected to the braking members of the motor vehicle.

A chamber 14, through which the shaft 13 extends and which is able to communicate with the outside through an exhaust opening 3, is formed in the lower part of the body 12. The wall of the chamber 14 has an upper axial tubular extension 15 in which a tubular piston 16 is sealingly slidably mounted. This piston has an annular flange at its upper end against which reacts a spring 17 urging it upwards against an annular valve seat 18 formed in an element 19 fixed to a tubular inside wall 20 of the body 12 surrounding the tubular extension 15 of the chamber 14. The inlet connector 1 communicates with the annular region between the tubular walls 20 and 15, below the valve 16, 18.

An axially hollow piston mounted in the middle portion of the body 12 is generally indicated 21 and has a disc-like head 22 sealingly slidable against the wall of the body 12. The lower end of the piston 21 has an annular edge 23 which can come into contact with the upper surface of the obturator piston 16 and cause it to move away from the seat 18. When the piston 21 opens the valve 16, 18 the inlet connector 1 is put into communication through this valve with the outlet connectors 2 through a space 24 below the piston 21 and surrounding the tubular wall 20.

The piston 21, the obturator 16 and the seat 18 together form a relay valve which controls communication between the pressure reservoir of the motor vehicle connected to the inlet 1 and the braking member connected to the outlets 2.

A flexible diaphragm 25, consisting, for example, of an elastomeric material, is mounted in the middle region of the body 12 above the piston 21.

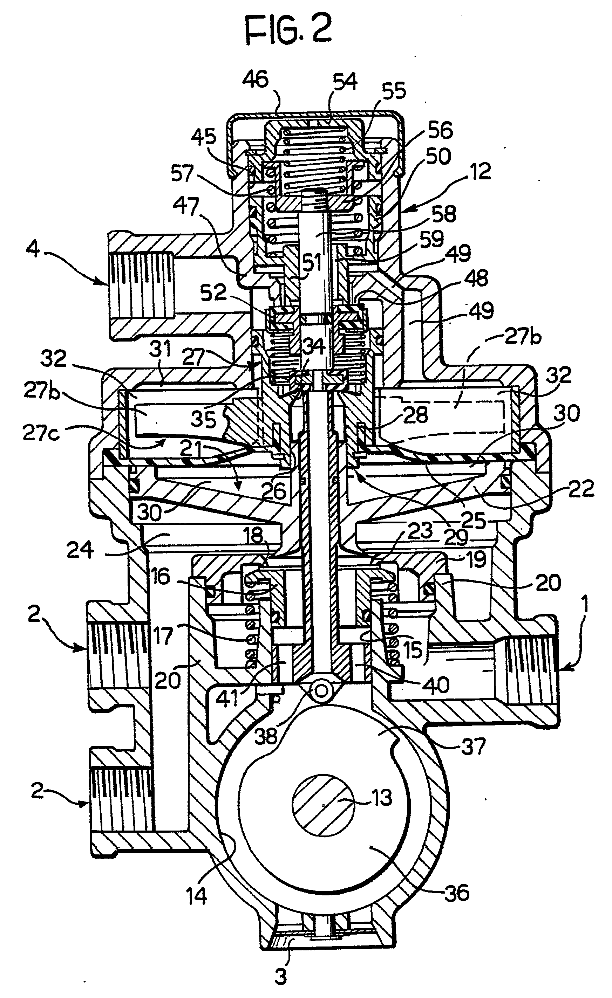

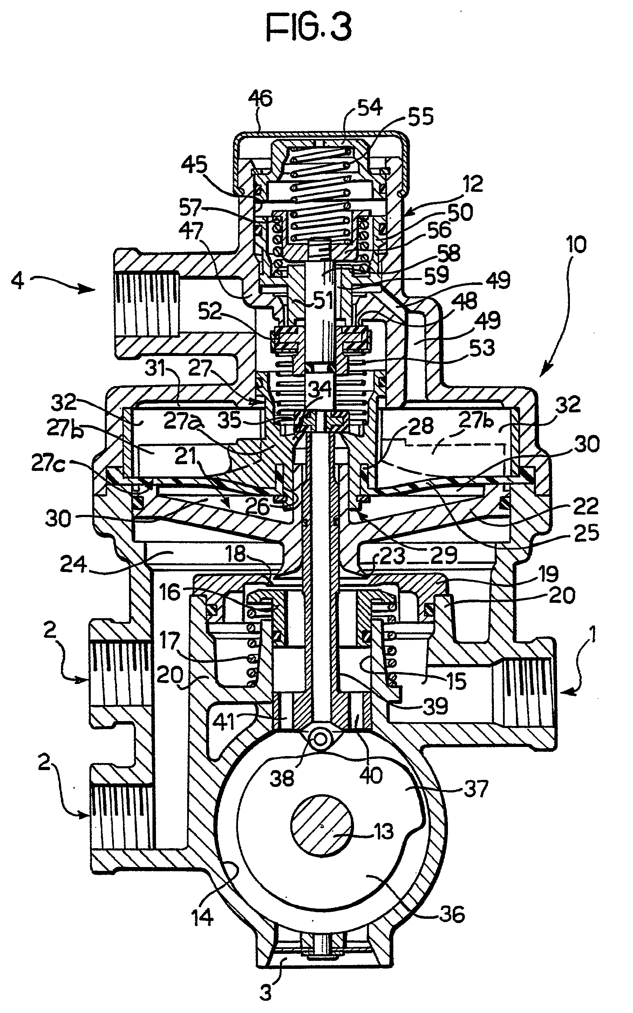

A fan-shaped piston of known type is indicated 27 and includes a hollow shaft 27a from which angularly equidistant arms 27b radiate. Each arm 27b of the piston 27 has a lower curved profile 27c, as shown in Figures 2 and 3.

The diaphragm 25 is fixed at 28 to the lower end of the piston 27. This end of the piston surrounds the rod of the piston 22 with radial clearance so that a narrow annular passage 29 is defined between them.

The chamber between the diaphragm 25 and the head 22 of the piston 21 is indicated 30.

A control chamber defined in the body 12 above the diaphragm 25 and into which the arms 27b of the piston 27 extend is indicated 31. Positioning and guide elements 32 are fixed in this chamber in known manner, in alternation with the radial arms 27b of the piston 27.

The piston 27 has an upper end sealingly slidably mounted in a cylindrical tubular portion 33 of the upper part of the body 12.

In the middle portion of the axial cavity of the piston 27, its wall forms a valve seat 34 with which an annular obturator 35 is associated.

A cam 36 is fixed to the shaft 13 in the chamber 14 and has a control profile 37 whose points are at a variable distance from the axis of the shaft 13. An end roller 38 carried by a control rod 39 which extends axially through the body 12 presses against this profile. In particular, this rod has at its lower end a thickened portion 40 slidable in the tubular wall 15 below the obturator piston 16 and having axial holes 41.

In the embodiment illustrated, the rod 39 is hollow and extends within the pistons 21 and 27, to the annular obturator 35. In particular, the rod 39 is sealingly slidable in the piston 21, whilst it is slidable with radial play relative to the piston 27.

In operation, the axial position of the control rod 39 depends on the angular position of the shaft 13 and the cam 37, and thus on the load condition of the vehicle. The cam 37 is mounted on the shaft 13 in such a way that in the fully loaded condition of the vehicle the rod 39 is situated in the position illustrated in Figure 2, whilst in the unloaded condition of the vehicle it is in the position illustrated in Figure 3.

In its upper part, the body 12 forms a cavity 45 closed at the top by a cover 46 and defined below by a wall 47.

The wall 47 has an opening coaxial with the axes of the pistons 21 and 27, whose edge forms a valve seat 48. A passage, indicated 49, puts the chamber 31 into communication with the lower region of the cavity 45. Sealingly slidably mounted above the opening of the passage 49 into this cavity is a piston 50 which has a lower tubular extension 51 extending through the opening in the wall 47 against an annular obturator 52. This obturator is pushed towards the seat 48 formed by the wall 47 by a helical spring 53 interposed between the disc and an annular shoulder formed by the inside wall of the piston 27.

A cup-shaped reaction member 54 is sealingly slidably mounted in the cavity 45 above the piston 50. A spring 55 is interposed between the reaction member 54 and a cup 56 arranged with its concave side upwards. Between this cup-shaped element and the piston 50 is interposed a spring 57, which is less stiff than the spring 55.

A rod 58 is mounted for axial translation through the piston 50-51 and the annular obturator 52. This rod has end tangs which are inserted in the annular obturator 35 and in a central aperture of the cup element 56 respectively. A passage 59 is defined between the rod 58 and the portion 51 of the piston 50.

The valve formed by the seat 48 and the obturator 52 controls communication between the inlet connector 4 and the control chamber 31 through the passage 49.

The valve formed by the seat 34 and the obturator 35 controls communication between the inlet connector 4 and the chamber 30 through the annular space 29 between the pistons 27 and 21.

The operation of the braking pressure modulator described above will now be described.

The operation of this device, however, corresponds largely to the manner of operation of known devices.

When the brakes of the vehicle are not activated, the obturator 16 rests against the seat 18. The pressure inlet connector 1 is therefore disconnected from the braking members connected to the connectors 2.

As soon as the driver acts on the brake pedal to operate the brakes, compressed air is supplied to the inlet connector 4. The compressed air reaches the control chamber 31 through the valve 52-48 (which is normally open due to the action of the spring 57 acting on the piston 50) and acts on the diaphragm 25 to cause the fan-shaped piston 27 to descend. This causes the seat 27 to move away from the obturator 25, so that the compressed air supplied through the connector 4 can now also reach the chamber 30 through the annular space 29.

As soon as the pressure in the control chamber 31 exceeds the force exerted by the spring 57 on the piston 50, the obturator 52 is brought against the seat 48 to shut off communication between the inlet connector 4 and the control chamber 31. Compressed air remains trapped in the latter chamber.

The compressed air supplied to the chamber 30 causes the descent of the piston 21-22 which opens the relay valve 16-18 and puts the inlet connector 1 into communication with the outlet connectors 2; compressed air is supplied to the brake members of the vehicle, to initiate braking.

As the load condition of the vehicle alters, the axial position of the hollow rod 39 varies relative to the body 12. This rod 39 determines the position of the obturator 35 with its upper end. Thus, the distance through which the fan-shaped piston 27 descends and the degree of "overlap" or coupling between the diaphragm 25 and the lower edges of the radial arms 27b of the fan piston vary in accordance with the load condition.

During braking, the axial position of the fan-shaped piston 27 depends on the values assumed by the pressures in the chambers 31 and 30. After closure of the valve 48-52, which limits the pressure reached in the chamber 31, the position of the fan-shaped piston 27 depends on the force exerted on it by the pressure in the chamber 30 through the diaphragm 25. Thus, the action of the pressure in the chamber 30 on the piston 27 depends on the area of contact existing between the diaphragm 25 and the radial arms 27b of the piston, and this area depends, as seen above, on the load condition of the motor vehicle.

Once braking has commenced with the opening of the valve 16-18, the pressure in the space 24 below the piston 21-22 increases. The position of the latter piston depends on the resultant force acting on it due to the pressures in the chambers 30 and the space 24. As soon as the force exerted on the piston 21 due to the pressure existing in the space 24 exceeds the force due to the pressure in the chamber 30, the piston 21 is displaced upwards again to allow the relay valve 16-18 to close, causing the disconnection of the inlet connector 1 from the outlet connectors 2 and interrupting the supply of pressure to the brake members.

The mode of operation of the device described up to now corresponds exactly with the mode of operation of prior devices. Unlike the latter, in the device according to the invention, the valve 48, 52 which limits the pressure accumulated in the control chamber 31 during braking has a calibration which is not fixed but is variable in dependence on the load carried by the vehicle. In fact, in the device according to the invention, the obturator 52 is brought against the seat 48 when the pressure in the control chamber 31 reaches a value sufficient to overcome the force exerted on the piston 50 by the spring 57. The force exerted by this spring, however, depends on the position of the cup element 56 which is determined, through the rod 58, by the axial position of the hollow rod 39 and which, as explained above, depends on the loading condition of the vehicle.

Consequently, according to the load condition in the device of the invention, a pressure whose value varies in dependence on the load carried by the vehicle is "trapped" in the control chamber 31 during braking. In particular, this pressure is less the greater the load.

By virtue of this characteristic, it is possible to eliminate or at least reduce the differences between the actual behaviour and the desired theoretical behaviour of the device.

## Claims

1. A device for modulating braking pressure in dependence on load for a vehicle provided with a pneumatic braking system, comprising
a hollow body (12) with a first inlet connector (4) for the braking control pressure, a second inlet connector (1) intended to be connected to a pressure source of the vehicle, and at least one outlet connector (2) intended to be connected to brake members of the vehicle, there being provided in the body (12):
sensor means (13, 14, 36 to 39) for sensing the load carried by the vehicle,
a device (21 to 35) for regulating the braking pressure, including a fan-shaped piston (27) cooperating with a variable degree of coupling with a diaphragm (25) which, together with the body (12), defines a variable-volume control chamber (31), and
a valve (48, 52) for limiting the pressure accumulated in the control chamber (31) during braking, characterised in that it also includes regulating means (55 to 58) intended to modify automatically the intervention pressure of the pressure limiting valve (48, 52) in dependence on the load carried by the vehicle.

## Patentansprüche

Vorrichtung, um den Bremsdruck lastabhängig bei einem Fahrzeug zu modulieren, das mit einem Druckluftbremssystem ausgestattet ist, wobei die Vorrichtung enthält:
einen hohlen Körper (12) mit einem ersten Einlaßverbindungsstück (4) für den Bremssteuerdruck, einem zweiten Einlaßverbindungsstück (1), das dazu dient, um mit einer Druckquelle des Fahrzeugs verbunden zu werden, und mit zumindest einem Auslaßverbindungsstück (2), das dazu dient, um mit den Bremsgliedern des Fahrzeugs verbunden zu werden, wobei im Körper (12) vorgesehen sind:
ein Geber (13, 14, 36 bis 39), um die vom Fahrzeug getragene Last abzutasten;
eine Einrichtung (21 bis 35), um den Bremsdruck zu regeln, einschließlich eines fächerförmigen Kolbens (27), der mit einem veränderbaren Kupplungsgrad mit einer Membran (25) zusammenwirkt, die zusammen mit dem Körper (12) eine Steuerkammer mit veränderbarem Volumen (31) bildet; und ein Ventil (48, 52), um den in der Steuerkammer (31) während einer Bremsung angesammelten Druck zu begrenzen, dadurch gekennzeichnet, daß die Vorrichtung weiters eine Regeleinrichtung (55 bis 58) aufweist, die dazu dient, um den Vermittlungsdruck des Maximaldruckventils (48, 52) in Abhängigkeit von der Last automatisch zu verändern, die vom Fahrzeug getragen wird.

## Revendications

1. Dispositif de modulation de la pression de freinage en fonction de la charge, destiné à un véhicule comportant un système de freinage pneumatique, comprenant: un corps creux (12) comportant un premier raccordement d'entrée (4) destiné à la pression de commande de freinage, un second raccordement d'entrée (1) destiné à être raccordé à une source de pression du véhicule, et au moins un raccordement (2) de sortie destiné à être relié à des éléments de freinage du véhicule, le corps (12) étant équipé de: moyens capteurs (13, 14, 36 à 39) destinés à capter la charge transportée par le véhicule, un dispositif (21 à 35) de régulation de la pression de freinage, comprenant un piston (27) en forme d'éventail qui coopère, avec un degré variable d'accouplement, avec un diaphragme (25) qui définit, avec le corps (12), une chambre de commande (31) de volume variable, et une valve (48, 52) destinée à limiter la pression accumulée dans la chambre de commande (31) pendant le freinage, caractérisé en ce qu'il comporte également des moyens de régulation (55 à 58) destinés à modifier automatiquement la pression d'intervention sur la valve (48, 52) de limitation de pression en fonction de la charge transportée par le véhicule.

# FIG. 1

# FIG. 2

# FIG.3